# EUROPEAN PATENT APPLICATION

(11) **EP 4 650 862 A1**
(43) Date of publication of application: **19.11.2025**
(21) Application number: 25176081.5
(22) Date of filing: 13.05.2025
(51) Int. Cl.: G02F 1/01, G02F 1/21, G02F 1/225

(54) **MACH-ZEHNDER INTERFEROMETERS WITH LINEARIZED OUTPUT AND METHODS FOR MACH-ZEHNDER INTERFEROMETERS**

(30) Priority: 15.05.2024 US 202463647677 P
(71) Applicant: Ranovus Inc., Kanata, Ontario K2K 2X1 (CA)
(72) Inventor: JAFARI, Omid, Ottawa, Ontario, K2W 0B2 (CA); MURRAY, Kyle, 90762 Fuerth (DE); HUANTE-CERON, Edgar, Stittsville, Ontario, K2S 0G2 (CA); SCHULIEN, Christoph, 90518 Altdorf (DE); PELLECCHIA, Gianluca, 90425 Nueremberg (DE); DEWANJEE, Arnab, Stittsville, Ontario, K2S 2P2 (CA)
(74) Representative: ABG Intellectual Property Law, S.L.

(57) **Abstract**

A Mach-Zehnder Interferometer (MZI) includes a pair of waveguides, an optical input configured to split light received at the optical input between the pair of waveguides, and respective ring resonator modulators located on the pair of waveguides, the respective ring resonator modulators comprising respective pn-junctions having respective capacitances connected in series. The MZI further includes a common driver configured to receive a differential electrical signal with data encoded therein and to control, using the differential electrical signal, respective n-sides of the respective pn-junctions to control the respective ring resonator modulators to respectively modulate the light into respective optical signals. The MZI further includes a common voltage bias configured to provide a common voltage to respective p-sides of the respective pn-junctions. The MZI further includes an optical output configured to receive the respective optical signals from the pair of waveguides and combine the respective optical signals.

## Description

### CROSS-REFERENCE TO RELATED APPLICATIONS

The present specification claims priority from United States Provisional Patent Application Number 63/647677, filed on May 15, 2024, which is incorporated herein by reference.

### FIELD

The present invention is directed to Mach-Zehnder interferometers for optical communication systems, and in particular to Mach-Zehnder interferometers with linearized output and methods for Mach-Zehnder interferometers.

### BACKGROUND

Optical transmitters based on Mach-Zehnder interferometers (MZIs) have a variety of technical problems, which include those related to junction behavior of phase modulators on one or more of the respective arms (e.g., waveguides) of MZIs. For example, as reverse voltage increases across the junction, the capacitance reduces. Furthermore, as junction efficiency increases (e.g., due to more refractive index modulation), the junction capacitance will increase and also become more nonlinear. Put another way, capacitance of junctions generally exhibits nonlinear behavior as a function of applied voltage. As junction efficiency increases, this nonlinearity intensifies, leading to optical nonlinear modulation. This may manifest as tailed or skewed PAM4 eye diagrams and/or unequally spaced PAM4 levels, which significantly impact the end-to-end signal integrity. Furthermore, such Mach-Zehnder interferometers may exhibit different behaviors due to optical self-heating that depends on input powers, and furthermore such Mach-Zehnder interferometers may have issues related to power consumption.

### BRIEF DESCRIPTIONS OF THE DRAWINGS

For a better understanding of the various implementations described herein and to show more clearly how they may be carried into effect, reference will now be made, by way of example only, in which:
FIG. 1 depicts a schematic illustration of an optical transmitter, according to the prior art.
FIG. 2A depicts a graph illustrating non-linear capacitance behavior of phase modulators in optical transmitters across different voltage levels used for encoding data, according to the prior art.
FIG. 2B depicts a PAM4 diagram illustrating the resulting signal integrity issues such as skewed and uneven eye diagrams due to non-linear capacitance as depicted in FIG. 2A, according to the prior art.
FIG. 3 depicts an optical transmitter, according to non-limiting examples.
FIG. 4 depicts an electrical schematic of the optical transmitter of FIG. 3, according to non-limiting examples.
FIG. 5 compares example capacitance curves between the optical transmitter of FIG. 3 and an optical transmitter of the prior art.
FIG. 6A depicts changes in capacitance over time with different applied voltages for the of the optical transmitter of FIG. 3, demonstrating dynamic capacitance behavior, according to non-limiting examples.
FIG. 6B depicts a more aligned and open PAM4 eye diagram for the optical transmitter of FIG. 3, according to non-limiting examples.
FIG. 7 depicts an optical transmitter that may be controlled based on input powers and/or application type, and/or to mitigate power consumption, according to non-limiting examples.
FIG. 8 depicts a method for controlling an optical transmitter based on input power or application type, according to non-limiting examples.
FIG. 9A depicts non-symmetric transmission of a ring resonator modulator at higher optical powers of the optical transmitter of FIG. 7, when using single side-tuning, according to non-limiting examples.
FIG. 9B depicts a shift in the non-symmetric transmission of FIG. 9A due to a low-frequency stress signal and/or pattern, according to non-limiting examples.
FIG. 10A depicts transmission as a function of wavelength for the ring resonator modulators of the optical transmitter of FIG. 7, when operated using differential side-tuning at lower optical powers, in according to non-limiting examples.
FIG. 10B depicts phase as a function of wavelength for the ring resonator modulators of the optical transmitter of FIG. 7, according to non-limiting examples.
FIG. 11 depicts shifts in transmission for the ring resonator modulators of the optical transmitter of FIG. 7 with an increase in temperature, when using differential side-tuning, according to non-limiting examples.
FIG. 12 depicts shifts in transmission for the ring resonator modulators of the optical transmitter of FIG. 7 with a decrease in temperature, when using differential side-tuning, according to non-limiting examples.
FIG. 13A depicts shifts in non-symmetric transmission of a ring resonator modulator as temperature increases, when using single side-tuning, according to non-limiting examples.
FIG. 13B depicts shifts in transmission of the optical transmitter of FIG. 3 as an operating point moves from a quadrature point to towards a null point, according to non-limiting examples.
FIG. 14 depicts a method for controlling an optical transmitter into quadrature while minimizing power usage, according to non-limiting examples.
FIG. 15 depicts an example of the method of FIG. 14, according to non-limiting examples.

### DETAILED DESCRIPTION

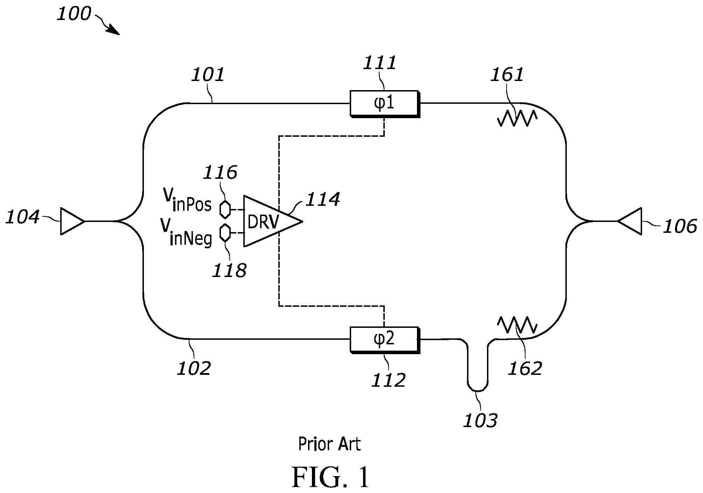

With reference to FIG. 1, an optical transmitter 100 of the prior art is depicted, comprising a pair of waveguides 101, 102 (e.g., arms), which may be interchangeably referred to hereafter as the first waveguide 101 and the second waveguide 102. The waveguides 101, 102 may be of different lengths, as indicated by an additional length 103 at the second waveguide 102.

The waveguides 101, 102 are joined at opposite ends by an optical input 104 and an optical output 106. The optical input 104 may comprise a beam splitter that splits incoming light (not depicted), for example from a laser, between the pair of waveguides 101, 102; in particular, the optical input 104 may comprise a 50/50 beam splitter. Similarly, the optical output 106 may comprise a beam splitter that receives light from the pair of waveguides 101, 102, which may be modulated into respective optical signals with data encoded therein, and combines the light and/or respective optical signals; the optical output 106 may be optically coupled to an optical waveguide/fiber (not depicted) onto which the combined optical signals are transmitted, for example to an optical receiver that decodes the data from the combined optical signals.

In particular, the optical transmitter 100 may comprise respective phase modulators 111, 112 (e.g., a first phase modulator 111 and a second phase modulator 112) respectively on the waveguides 101, 102, that may be respectively controlled via a driver 114, to introduce respective phase shifts φ1 and φ2 into the light on the waveguides 101, 102. Such phase shifts are understood to encode data into the light, for example based on a differential electrical signal, for example in the form of voltages V_{inPos}, V_{inNeg} received at positive and negative inputs 116, 118 of the driver 114. While not depicted, it is understood that the inputs 116, 118 are electrically coupled to a device providing the differential electrical signal.

Furthermore, the different lengths of the waveguides 101, 102 may be selected, such that the respective optical signals are combined at, or near, respective quadrature points.

For clarity, unless otherwise indicated, optical connections, such as waveguides, and the like, are depicted herein in solid lines, whereas electrical connections, such as wiring, and the like, between electrical components, are depicted in broken lines.

The prior art optical transmitter 100 is hence understood to comprise a Mach-Zehnder Interferometer (MZI), which is used to encode data into light from a laser. The optical transmitter 100 suffers from a variety of technical problems.

For example, the phase modulators 111, 112 may be based on any suitable technology, including, but not limited to, resonant ring modulators (RRMs). Regardless, the phase modulators 111, 112 are understood to have respective capacitances that are generally non-linear. For example, the phase modulators 111, 112 may include electrical junctions, withing which may be located devices for modulating phase, and which are driven by an electrical signal across the junction. As the respective capacitances of the phase modulators 111, 112 are non-linear, various problems arise.

Furthermore, the optical transmitter 100 may exhibit different behavior depending on input power due to optical self-heating.

Furthermore, as depicted, the optical transmitter 100 may comprise heaters 161, 162 along the pair of waveguides 101, 102, and the heaters 161, 162 may be controlled to heat a respective portion of at least one of the pair of waveguides 101, 102 to further control a phase difference of between the respective optical signals on the waveguides 101, 102, in addition to the length 103. However, the heaters 161, 162 may consume excessive power that may need to be controlled.

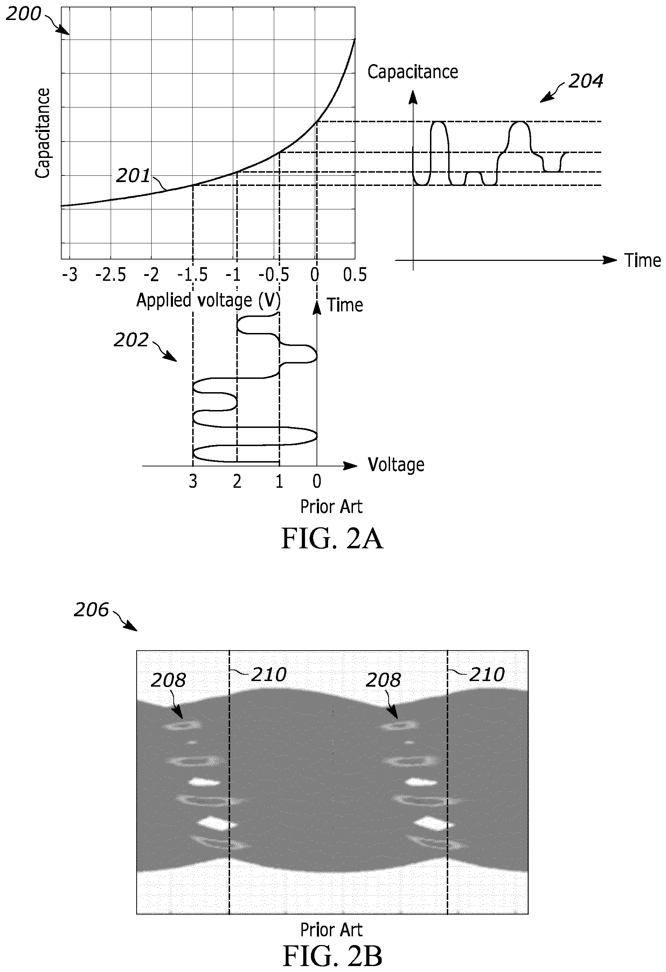

With regards to the respective capacitances of the phase modulators 111, 112 being non-linear, attention is next directed to FIG. 2A, which depicts an example of non-linear capacitance of the phase modulators 111, 112, and how the capacitance changes with different four different applied voltages (e.g., four available amplitude levels for two bit encoding into the light on the waveguides 101, 102), and FIG. 2B, which depicts a resulting PAM4 (phase-amplitude modulation with 4 levels) diagram of such capacitance changes.

For example, FIG. 2A depicts a graph 200 showing a curve 201 of how capacitance of a single junction of a phase modulator 111, 112 changes with applied voltage, and includes a voltage diagram 202 showing how voltage applied to a single junction of a phase modulator 111, 112 may change, over time, between four different voltage levels (e.g., 0, 1, 2, 3), for example when encoding data into light on a waveguide 101, 102. The resulting changes in capacitance with time are depicted in a diagram 204.

FIG. 2B shows the effect of such changes in capacitance in a PAM4 diagram 206. For example, the PAM4 diagram 206 includes four eyes 208, which ideally should be aligned, for example along lines 210, and "open" (e.g., consistent gaps therebetween). However, the eyes 208 are clearly not aligned along the lines 210, and furthermore the gaps therebetween are clearly uneven and/or small.

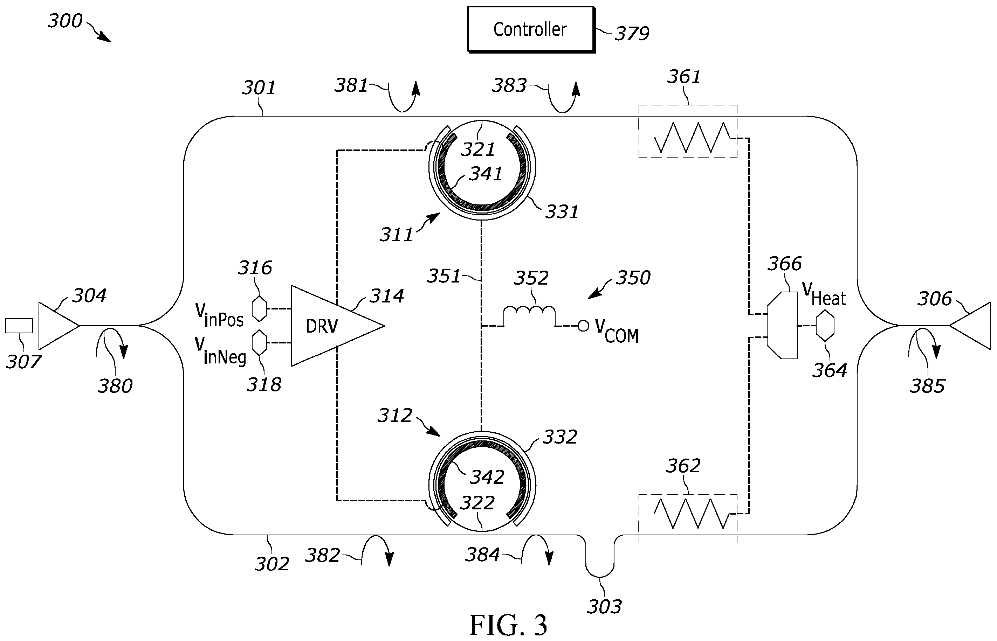

To address this problem, attention is next directed to FIG. 3, which depicts an optical transmitter 300, which generally comprises an MZI, which is used to encode data into light from a laser, as is next described. The optical transmitter 300 may be a component of a photonic integrated circuit (PIC) deployed in an optical communication system.

The optical transmitter 300 comprise a pair of waveguides 301, 302 (e.g., a first optical waveguide 301 and a second optical waveguide 302, and which may have different lengths as indicated by an additional length 303 of the second waveguide 302, though the length 303 may be optional), an optical input 304 configured to split light received at the optical input between the pair of waveguides 301, 302, and an optical output 306 configured to receive respective optical signals from the pair of waveguides 301, 302 and combine the respective optical signals, for example at a quadrature point.

The optical input 304 may comprise a beam splitter that splits incoming light between the pair of waveguides 301, 302, for example the light provided by a laser 307 at the optical input 304. The laser 307 may, or may not, be a component of the optical transmitter 300. In particular, the optical input 304 may comprise a 50/50 beam splitter such that the light from the laser 307 is about equally divided between the optical waveguides 301, 302. As described herein, phase modulators on the pair of waveguides 301, 302 may modulate the light on the waveguides 301, 302 into respective optical signals with data encoded.

Similarly, the optical output 306 may comprise a beam splitter that receives (e.g., modulated) light from the pair of waveguides 301, 302, and combines the light and/or respective optical signals. The optical output 306 may be optically coupled to an optical waveguide (not depicted) onto which the combined optical signals are transmitted, for example to an optical receiver that decodes the data from the combined optical signals.

The optical transmitter 300 further comprises respective phase modulators, the form of RRMs 311, 312 (e.g., a first ring resonator modulator 311 and a second ring resonator modulator 312), located on the pair of waveguides 301, 302, the respective RRMs 311, 312 comprising respective pn-junctions having respective capacitances connected in series. The pn-junctions and the respective capacitances are described in further detail below.

The optical transmitter 300 further comprises a common driver 314 configured to: receive a differential electrical signal with data encoded therein; and control, using the differential electrical signal, respective p-sides of the respective pn-junctions to control the respective RRMs 311, 312 to modulate the light into respective optical signals (e.g., combined by the optical input 306). For example, such a differential electrical signal may be provided, for example in the form of voltages V_{inPos}, V_{inNeg} received at positive and negative inputs 316, 318 of the driver 314. While not depicted, it is understood that the inputs 316, 318 are electrically coupled to a device providing the differential electrical signal.

The ring resonator modulators (RRMs) 311, 312 are next described.

For example, the RRMs 311, 312 are understood to respectively comprise respective optical rings 321, 322 that are located between respective pn-junctions formed by respective p-sides 331, 332 (e.g., a region of p-doped material, such as p-doped material that extend at least partially along an external side of an optical ring 321, 322, and respective n-sides 341, 342 (e.g., a region of n-doped material, such as n-doped material that extend at least partially along an internal side of an optical ring 321, 322). The p-sides 331, 332 may alternatively be referred to as external contacts, and the n-sides 341, 342 may alternatively be referred to internal contacts. Indeed, it is understood that, to control a respective resonance wavelength, and/or a respective position of a free spectral range (FSR), of the optical rings 321, 322, respective electric fields may be placed across the optical rings 321, 322 by applying a voltage to the respective n-sides 341, 342 via the driver 314. Furthermore, such respective positions of respective FSR, for example relative to a wavelength of light (e.g., laser light from a laser ) input to the waveguides 301, 302, may be controlled by respective heaters of the RRMs 311, 312 (not depicted, for simplicity).

As depicted, and in contrast to the optical transmitter 100 of the prior art, the optical transmitter 300 further comprises a common voltage bias 350 configured to provide a common voltage to respective p-sides 331, 332 of the respective pn-junctions; for example, as depicted, the respective p-sides 331, 332 are connected via an electrical connection 351, and the common voltage bias 350 is connected to the connection 351. Hence, while not depicted, the optical transmitter 300 may comprise, or be connected to, one or more voltage sources for providing voltages of the common voltage bias 350.

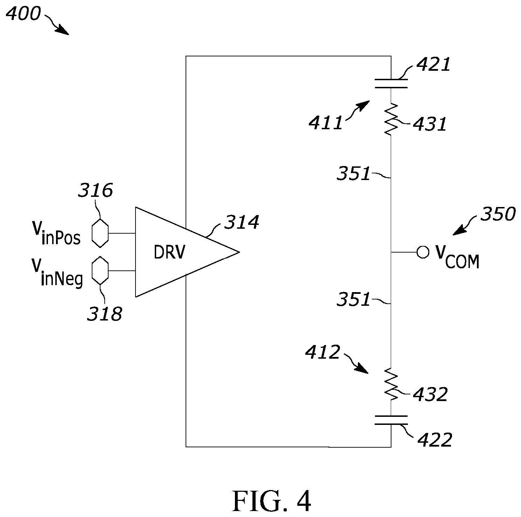

The electrical properties of the RRMs 311, 312 are described in further detail with respect to FIG. 4.

However, prior to describing electrical properties of the RRMs 311, 312, the remainder of FIG. 3 is next described.

For example, while optional, the optical transmitter 300 may comprise an inductor 352 between the common voltage bias 350 and the electrical connection 351 and/or the respective p-sides 331, 332, for example to block any high frequency voltages that may occur at the common voltage bias 350, and which may otherwise be set to, and/or output, a constant value.

Furthermore, as depicted, the optical transmitter 300 may comprise at least one heater 361, 362 along the pair of waveguides 301, 302. For example, as depicted, the optical transmitter 300 comprises a first heater 361 located along the first waveguide 301, between the first RRM 311 and the optical output 306, and comprises a second heater 362 located along the second waveguide 302, between the second RRM 312 and the optical output 306. The heaters 361, 362 are connected to a voltage supply 364 (e.g. V_{Heat}) via a driver/switch 366, that may be controlled by a controller 379 (e.g., at least one processor), to provide voltage from the voltage supply 364 to heat one heater 361, 362, or both heaters 361, 362. Hence, while not depicted, the optical transmitter 300 may comprise, or be connected to, one or more voltage sources for providing voltages of the voltage supply 364. For example, the at least one heater 361, 362 is generally configured to heat a respective portion of at least one of the pair of waveguides 301, 302 to control a phase difference of between the respective optical signals on the waveguides 301, 302. While the length 303 may introduce such a phase difference, for example to place optical signals on the waveguides 301, 302 into quadrature (e.g., a 90° phase difference), one or more of the heaters 301, 302 may be controlled to maintain quadrature of the optical signals on the waveguides 301, 302. Furthermore, the controller 379 may, or may not, be a component of the optical transmitter 300.

Hence, the optical transmitter 300 may comprise, or be connected to, the controller 379, and the like, that implements the control functionality described herein, for example to control various heaters described herein, and/or the inputs 316, 318, and the like. While for simplicity, the controller 379 is not depicted as being communicatively coupled to other components of the optical transmitter 300, the controller 379 is nonetheless understood to be communicatively coupled to any suitable components.

As depicted, the optical transmitter 300 may comprise one or more sensors 380, 381, 382, 383, 384, 385 located, respectively, at: the optical input 304, before and after the first RRM 311 on the first optical waveguide 301, before and after the second RRM 312 on the second optical waveguide 302, and at the optical output 306. The sensors 380, 381, 382, 383, 384, 385 may comprise respective photodetectors, and the like, that sample light at the optical input 304, the optical output 306 and on the optical waveguides 301, 302, and provide respective outputs (e.g., signals) to the controller 379 indicative of sampled optical power and/or sampled intensity of light. While not depicted, the sensors 380, 381, 382, 383, 384, 385 are understood to be communicatively coupled to the controller 379.

By comparing, for example, respective output from the sensors 380, 381, and/or respective output from the sensors 382, 380, a degree of optical splitting by a beam splitter of the optical input 304 may be determined.

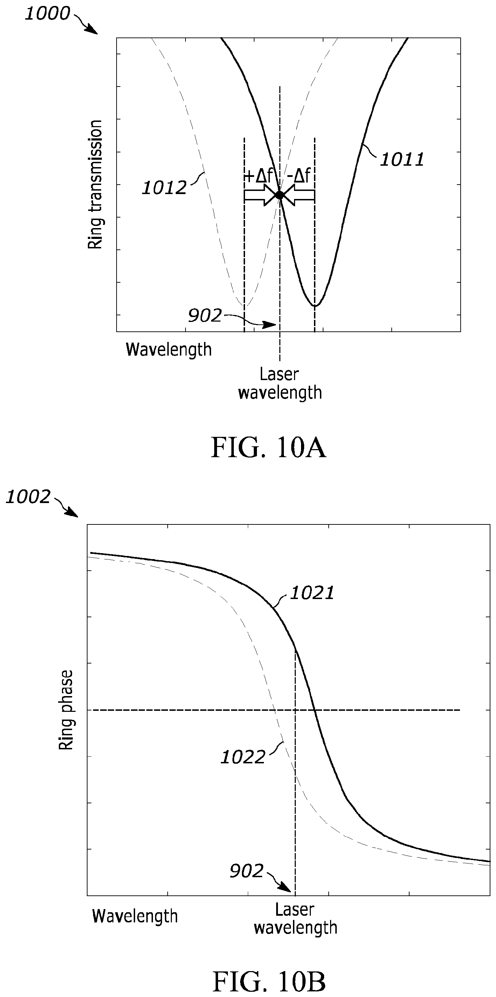

Similarly, by comparing respective ratios of respective output from the sensors 381, 383, insertion loss of the first RRM 311 may be determined. Similarly, by comparing respective ratios of respective output from the sensors 382, 384, insertion loss of the second RRM 312 may be determined. In general, the insertion loss of the RRMs 311, 312 should be the same; as such, the controller 379 may receive output from the pair of sensors 381, 383, and the pair of sensors 382, 384, determine insertion loss for each of the RRMs 311, 312, and, when the respective insertion loss of the RRMs 311, 312 is different, the controller 379 may respectively control one or more of heaters of the RRMs 311, 312 until the respective insertion loss is the about same. Alternatively, or in addition, one or more heaters of the RRMs 311, 312 may be controlled until a cross-point of transmission of the RRMs 311, 312 is about at a wavelength of the laser 307 (e.g., see FIG. 10A).

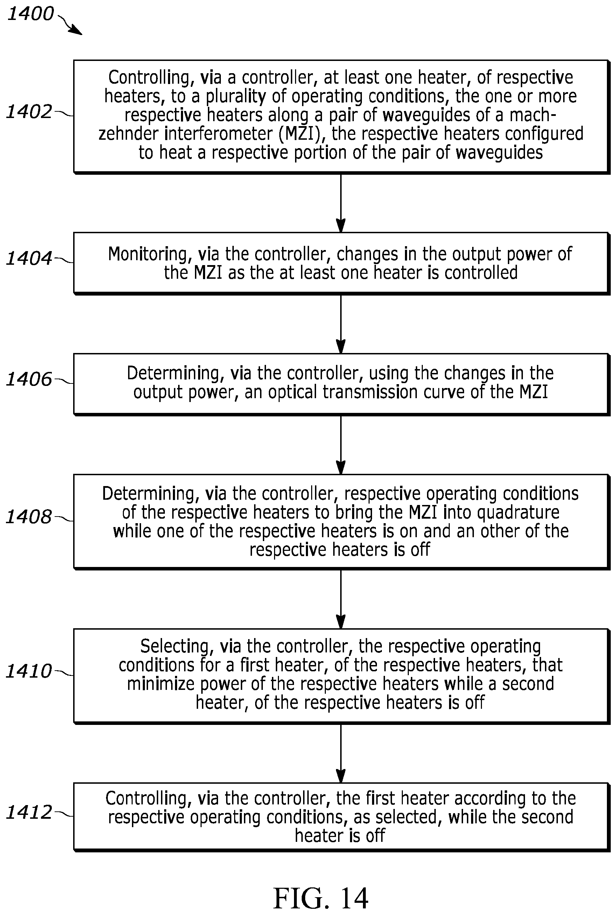

Similarly, by the controller 379 comparing output from the sensors 380, 385, relative phase of the RRMs 311, 312 may be determined and/or whether the optical signals on the waveguides 301, 302 are in quadrature, and the like. When not in quadrature, the controller 379 may control one or more of the heaters 361, 362 to bring the optical signals on the waveguides 301, 302 into quadrature (e.g. as described with respect to FIG. 14 to FIG. 15).

Hence, for example, by detecting intensity of light and/or optical power of one or more of the optical signals on the waveguides 301, 302, and/or at the optical input 304 and output 306, relative phase of the optical signals on the waveguides 301, 302 may be detected, and brought into quadrature, and/or quadrature may be maintained, for example in a feedback loop with the RRMs 311, 312 and/or the heaters 361, 362. In particular, the sensors 380, 381, 382, 383, 384, 385 may be communicatively coupled to the controller 379 that controls the heaters 361, 362, and the controller 379 may control the heaters 361, 362 in a feedback loop with the one or more sensors to maintain quadrature of the optical signals on the waveguides 301, 302.

Attention is next directed to FIG. 4, which depicts a simplified electrical diagram 400 of the optical transmitter 300. In contrast to FIG. 4, electrical connections between electrical components in the diagram 400 are depicted in solid lines for simplicity (e.g., as no optical connections are depicted in FIG. 4). While for simplicity the inductor 352 is not depicted, the inductor 352 may nonetheless be present.

In particular, the driver 314, the inputs 316, 318, and the common voltage bias 350 are depicted, along with respective electrical components of pn-junctions 411, 412 of the RRMs 311, 312. In particular, the pn-junctions 411, 412 comprise respective capacitances 421, 422 and respective resistances 431, 432. In particular examples (e.g., for resonant ring modulators used in PICs), the capacitances 421, 422 may be in a range of about 50 fF to about 80 fF, and the resistances 431, 432 may be about 40 ohms, though any suitable values for the capacitances 421, 422 and the resistances 431, 432 are within the scope of the present specification.

Furthermore, for the pn-junction 411 of the first RRM 311, the driver 314 is connected to (e.g., in order), the capacitance 421, the resistance 431 and the common voltage bias 350, and similarly, for the pn-junction 412 of the second RRM 312, the driver 314 is connected to (e.g., in order), the capacitance 422, the resistance 432 and the common voltage bias 350. As such, it is understood that the pn-junctions 412 share the common voltage bias 350, and furthermore that the capacitances 421, 422 are connected in series. It is furthermore understood that the driver 314 drives the RRMs 311, 312, and hence the pn-junctions 411, 412, in antiphase, such that when a "high" voltage is applied to the n-side 341 of the pn-junction 411, a corresponding "low" voltage is applied to the n-side 342 of the pn-junction 412.

Indeed, as the capacitance 421, 422 are connected in series, whichever capacitance 421, 422 is lower and/or smaller (e.g., due to non-linearities thereof, and the difference in driving voltage of the pn-junctions 411, 412) dominates the total capacitance of the optical transmitter 300 (e.g., as 1/Cₜₒₜₐₗ=Σ(1/C₁+1/C₂), where Cₜₒₜₐₗ is total capacitance, C₁ is a value of the capacitance 421, and C₂ is a value of the capacitance 422).

Further details of the optical transmitter 300 are next described.

It is understood that the RRMs 311, 312 generally modulate a phase of an optical signal at each arm (e.g., the waveguides 301, 302) of an MZI of the optical transmitter 300,

It is understood that the RRMs 311, 312 are differentially monolithically driven and this enables the use of highly efficient junctions with high nonlinear capacitance while ensuring linear optical modulation.

It is further understood that the RRMs 311, 312 are direct current (DC)-biased by way of the common driver 314 driving the n-sides 341, 342. For example, as depicted in FIG. 4 the capacitances 421, 422 in series with the resistances 431, 432 are understood to produce high impedance in DC circuits, and, as such, the common driver 314 output operating point is not modified. Such an arrangements generally avoids a need for large alternating current (AC)-coupling capacitors, area-angry and/or complex circuits needed to address a right bias operation point and extra parasitic that the common driver 314 needs to drive.

Put another way, both RRMs 311, 312 are understood to share a common regulator source, in particular the common voltage bias 350, to adjust a bias point of the RRMs 311, which generally enables a same bias voltage across the pn-junctions 411,412. While not depicted, the voltage Vcom of the common voltage bias 350 may be generated from a buffer that replicates a tunable voltage generate from a VDAC (voltage digital to analog converter) and provides the drive capability to absorb leakage current of the pn-junctions 411,412. With reference to both FIG. 3 and FIG 4, when Vcom is less than voltages output by the driver 314 to the n-sides 341, 342, the pn-junctions 411,412 are reversed-biased, otherwise the pn-junctions 411,412 are forward-biased. In this manner, it is possible to trade-off parasitic capacitance, driven from the driver 314, with the electro-optical efficiency of the pn-junctions 411, 412 of the RRMs 311, 312 (e.g., extinction ratio (ER) of the RRMs 311, 312, and hence also optical modulation amplitude (OMA) of the RRMs 311, 312).

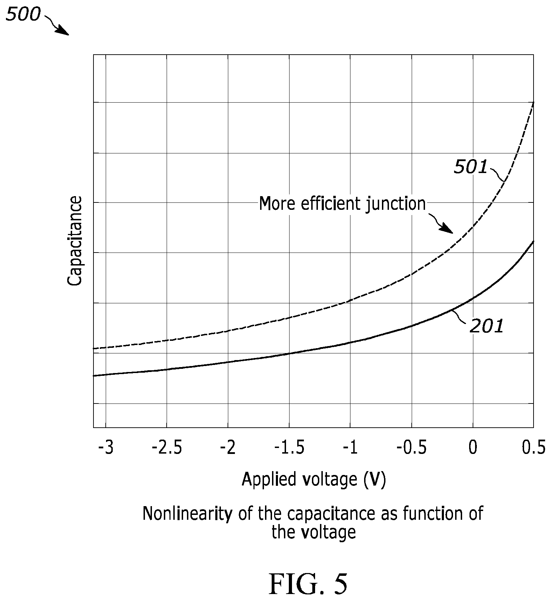

It is furthermore understood, with reference to FIG. 5, that while a more efficient junction increases the nonlinearity of the capacitance curve, the optical transmitter 300 may have linearized optical modulated output, which mitigates the impact of such nonlinearity. This may generally be due to the two pn-junctions 411, 412 of the optical transmitter 300 being connected in series.

For example, FIG. 5 depict a graph 500 showing the curve 201 of the junctions of the optical transmitter 100, while a curve 501 depicts a similar curve of junctions 411, 412 of the optical transmitter 300. It is clear from the curves 201, 501 that the optical transmitter 300 has higher overall capacitances 421, 422 which are also more non-linear.

However, at the optical transmitter 300, the two junction capacitances 421, 422 are placed in series, thereby reducing the total static capacitance to half from an electrical perspective of the driver 314. In particular, as the voltages are applied to the junction capacitances 421, 422 in anti-phase, and as the junction capacitances 421, 422 are connected in series, the dynamic capacitance is predominantly determined by the junction capacitance 421, 422 with the smaller value, which is generally more in reverse bias as compared to the capacitance 421, 422 with the large value. This setup leads to the better linearization of optical modulation, even when junction efficiencies are high. For example as the reverse bias voltage decreases, the nonlinearity of the capacitances 421, 422, as a function of applied voltage increases, so the optical transmitter 300 provided herein generally leads to an improvement of the linearization of a response the optical transmitter 300 as compared to the optical transmitter 100 of the prior art.

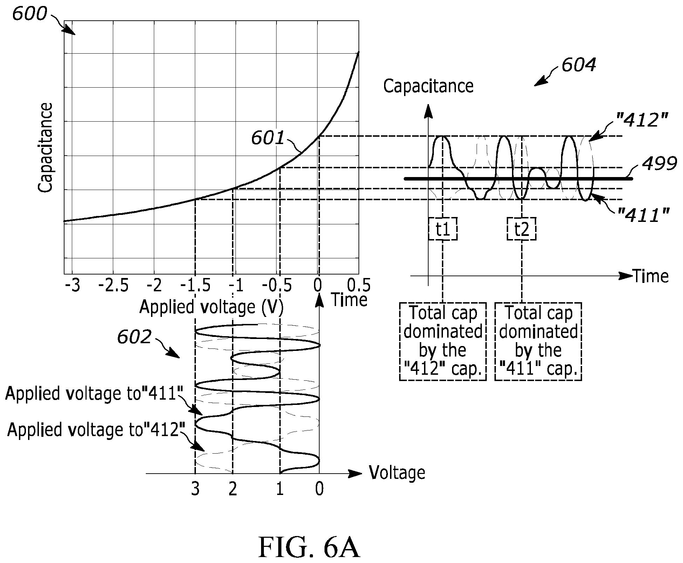

For example, FIG. 6A depicts a graph 600 showing a curve 601 of how capacitance 421, 422 of a pn-junction 411, 412 changes with applied voltage, and includes a voltage diagram 602 showing how voltage applied to a pn-junction 411, 412 and/or the RRMs 311, 312 may change, over time, between four different voltage levels (e.g., 0, 1, 2, 3), for example when encoding data into light on the waveguides 301, 302. Example values of the different voltage levels are indicated by lines extending from the voltage diagram 602 to the voltage axis of the graph 600. Hence, it is understood that as the voltage level increases from 0 to 1 to 2 to 3, the corresponding voltage decreases (or increases in absolute value).

At the voltage diagram 602, solid lines show the voltage at the pn-junction 411, while broken lines show the voltage at the pn-junction 412.The resulting changes in capacitance 421, 422 with time are depicted in a diagram 604, with solid lines showing the capacitance 421, while broken lines show capacitance 422.

However, it is understood that the pn-junctions 411, 412 and/or the RRMs 311, 312 are driven in reverse bias, such that when the pn-junction 411 is at voltage level "0", the pn-junction 412 is at voltage level "3", and vice versa. Similarly, when the pn-junction 411 is at voltage level "1", the pn-junction 412 is at voltage level "2", and vice versa. Hence, the pn-junction 411, 412 may be driven to four different states: [(0, 3), (3, 0), (1, 2), (2, 1)].

Furthermore, as the capacitances 421, 422 are connected in series, the lowest capacitance 421, 422 is understood to dominate the total capacitance. For example the line 499 at the diagram 604 shows a cross-over point where the capacitances 421, 422 are at about a same value and it is understood that when one capacitance 421, 422 is high, the other is low, for example due to the above described data scheme. Hence, a total capacitance (not depicted) tends to stay in a relatively narrow range, as compared to the capacitances of the diagram 204.

Indeed, also indicated at the graph 600, at a time t1, the total capacitance is dominated by the second capacitance 422 of the second pn-junction 412; hence, even though the first capacitance 421 of the first pn-junction 411 is much higher at the time t1, the total capacitance remains relatively low.

Similarly, at a time t2, the total capacitance is dominated by the first capacitance 421 of the first pn-junction 411; hence, even though the second capacitance 422 of the second pn-junction 412 is much higher at the time t2, the total capacitance remains relatively low.

Put another way, the total dynamic capacitance from an electrical perspective of the driver 314 is dominated by the smaller of the capacitances 421, 422 since the capacitances 421, 422 are provided in series.

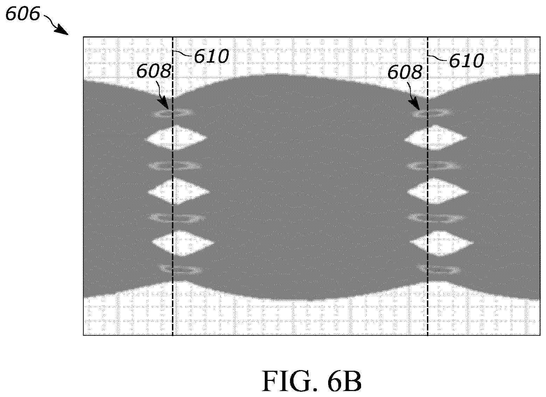

FIG. 6B shows the effect of such changes in capacitance in a PAM4 diagram 606 of the optical transmitter 300, which may be compared with the PAM4 diagram 206 of the optical transmitter 100. For example, like the PAM4 diagram 206, the PAM4 diagram 606 includes four eyes 608, which ideally should be aligned, for example along lines 610, and "open" (e.g., consistent gaps therebetween). Indeed, comparing the PAM4 diagrams 206, 606, it is clearly understood that the eyes of the PAM4 diagram 606 are more aligned than the eyes of the PAM4 diagram 206, and furthermore the eyes of the PAM4 diagram 606 are more "open" than the eyes of the PAM4 diagram 206. Hence, the benefits and/or advantages of the optical transmitter 300, as compared to the optical transmitter 100, are clearly demonstrated.

Indeed, such benefits and/or advantages may be due to the two pn-junctions 411, 412 being biased using a common regulator source (e.g., the common bias voltage 350), which may ensure that both the pn-junctions 411, 412 maintain a same bias point, thereby eliminating and/or reducing any reverse bias offset between the RRMs 311, 312. Such uniformity may enable the RRMs 311, 312 to produce the same levels of phase modulation in both of the waveguides 301, 302, effectively preventing nonlinear modulation.

Furthermore, any offset in phase modulation induced by the RRMs 311, 312 of the waveguides 301, 302 may result in nonlinear amplitude modulation and unequally spaced levels in a PAM4 eye diagram. However, use of a common regulator source (e.g., the common bias voltage 350) may eliminate use of AC-coupling in high-speed routing, which in turn may significantly reduce the complexity, size, and additional parasitic capacitances of an electrical circuit for AC-coupling.

Some application-specific operations of optical transmitters, as provided herein are next described, and that may be used with the optical transmitter 300 and/or optical transmitters of the prior art.

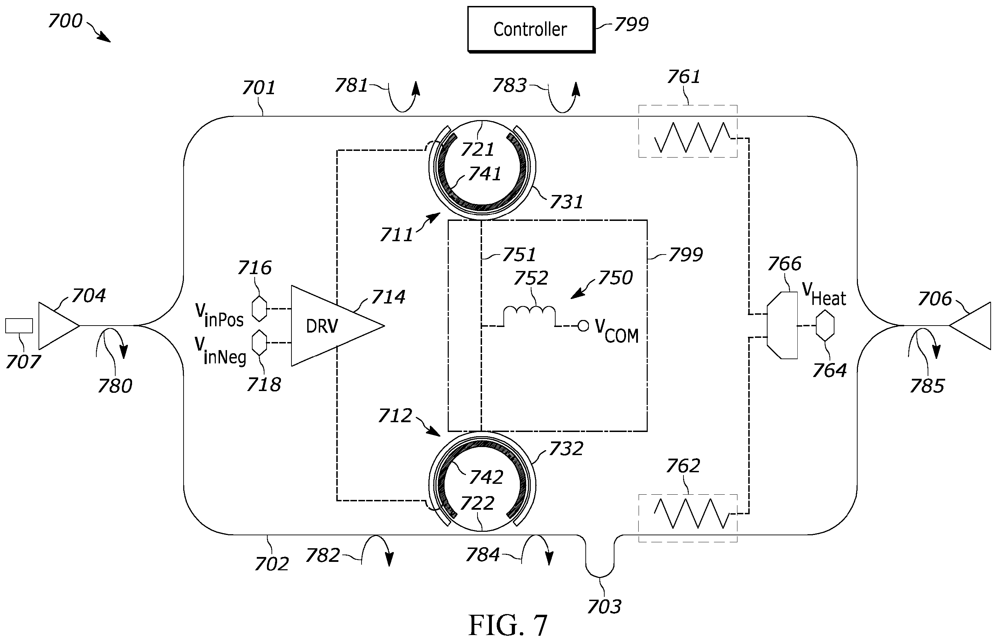

As such, attention is next directed to FIG. 7, which depicts an optical transmitter 700 that is substantially similar to the optical transmitter 300, with like components having like numbers, but in a "700" series rather than a "300" series.

For example, as depicted, the optical transmitter 700 comprises a pair of waveguides 701, 702, an additional length 703 of a second waveguide 702, an optical input 704, an optical output 706, the optical input 704 configured to receive light from a laser 707 (which may or may not be a component of the optical transmitter 700), ring resonator modulators 711, 712, a common driver 714, positive and negative inputs 716, 718 of the common driver 714. Furthermore, the ring resonator modulators 711, 712 comprise respective optical rings 721, 722 that are located between respective pn-junctions formed by respective p-sides 731, 732 (e.g., a region of p-doped material, such as p-doped material that extend at least partially an external side of an optical ring 721, 722, and respective n-sides 741, 742. The optical transmitter 700 further comprises a common voltage bias 750, an electrical connection 751 between the respective p-sides 731, 732, an optional inductor 752 between the common voltage bias 750 and the respective p-sides 731, 732, at least one heater 761, 762, along the pair of waveguides 701, 702, connected to a voltage supply 764, a controller 779 (which may or may not be a component of the optical transmitter 700), and one or more sensors 780, 781, 782, 783, 784, 785.

Furthermore, as depicted, components 799 of the optical transmitter 700 may be optional, including the common voltage bias 750 and the electrical connection 751 between the respective p-sides 731, 732 (e.g., and the optional inductor 752,). It is understood that, when the components 799 are present, the optical transmitter 700 comprises the optical transmitter 300 and, when the components 799 are not present, the optical transmitter 700 resembles an optical transmitter of the prior art. Regardless, a method for controlling the optical transmitter 700 between single-side tuning, or differential-side tuning may be implemented with, or without, the components 799.

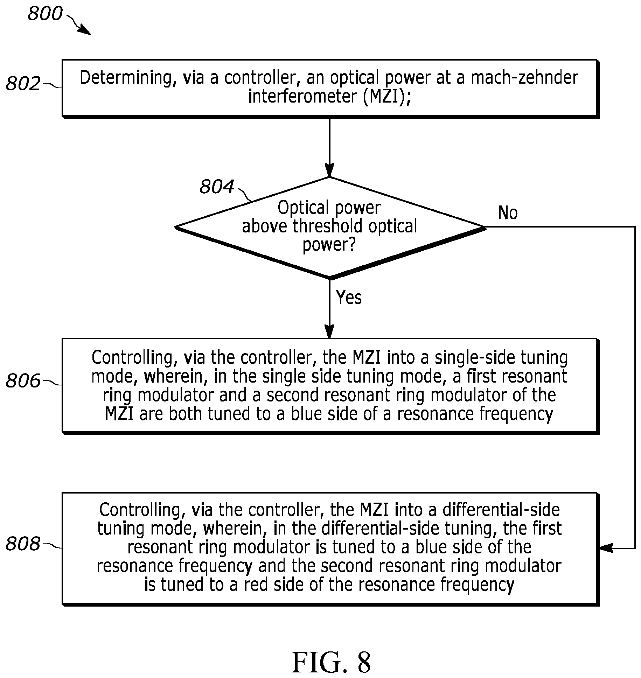

Attention is now directed to FIG. 8 which depicts a flowchart representative of a method 800 for controlling an optical transmitter, and more specifically an MZI, based on optical power and/or an application type. The operations of the method 800 correspond to machine readable instructions that are executed by the controller 779. In the illustrated example, the instructions represented by the blocks of the method 800 may be stored at a memory in communication with the controller 779. The method 800 of FIG. 10 is one way in which the optical transmitter 700 may be configured. Furthermore, the following discussion of the method 800 will lead to a further understanding of the optical transmitter 700, and its various components.

The method 800 need not be performed in the exact sequence as shown and likewise various blocks may be performed in parallel rather than in sequence. Accordingly, the elements of method 800 are referred to herein as "blocks" rather than "steps." The method 800 may be implemented on variations of the optical transmitter 700 of, as well.

At a block 802, the controller 779 determines an optical power, for example by communicating with the sensor 780 at the optical input 704, and/or one or more of the sensors 781, 782, and the like.

At a block 804, the controller 779 compares the optical power to a threshold optical power to determine whether the optical power is above, or below, the threshold optical power. The threshold optical power may depend on whether the optical power determined at the block 802 is determined from the sensor 780 or one or more of the sensors 781, 782, as described herein.

When the optical power is above the threshold optical power (e.g., a "YES" decision at the block 804), at a block 806, the controller 779 controls the MZI of the optical transmitter 700 into a single-side tuning mode. In the single-side tuning mode, both the RRMs 711, 712 are tuned to a blue side of a resonance frequency and/or to a blue side of a wavelength of light input to the optical transmitter 700, as described in more detail herein.

However, when the optical power is below the threshold optical power (e.g., a "NO" decision at the block 804), at a block 808, the controller 779 controls the MZI of the optical transmitter 700 into a differential-side tuning mode. In the differential-side tuning, one of the RRMs 711, 712 is tuned to a blue side of the resonance frequency, and/or to a blue side a wavelength of light input to the optical transmitter 700, while the other of the RRMs 711, 712 is tuned to a red side of the resonance frequency, and/or to a red side a wavelength of light input to the optical transmitter 700.

In particular, the RRMs 711, 712 may be tuned to a blue side or a red side using respective heaters thereof.

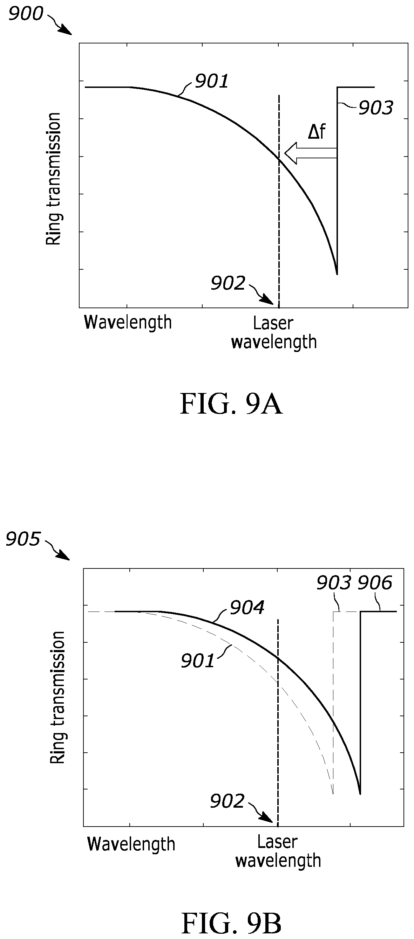

The method 800 is next described in more detail with respect to FIG. 9 to FIG. 13.

In particular, some applications may require high optical power (optical link budget), that is greater than a threshold optical power. In these examples, both of the RRMs 711, 712 may be tuned to a blue side of resonance frequency, which is referred to as single-side tuning.

However, other applications may require a nominal optical power at the input 704, that is less than a threshold optical power. In these applications, differential-side of the RRMs 711, 712 may occur. for example, the first RRM 711 may be tuned on a blue side of resonance frequency (e.g., using a respective heater of the first RRM 711) and the second RRM 712 may be tuned on a red side of resonance frequency (e.g., using a respective heater of the second RRM 712), or vice versa, assuming that both RRMs 711, 712 may have the same optical properties, and hence nominal resonance frequencies may be the same. Such differential-side tuning may enhance the modulation performance of the RRMs 711, 712, and compensate for the effect of optical nonlinearity introduced by the two optical rings 721, 722, for example due to an optical self-heating effect, thereby stabilizing the performance of the optical transmitter 700.

Hence, in these examples, the method 800 further comprise the controller 779: selecting single-side tuning or differential-side tuning based on an application type received at the controller 779. For example, an indication of application type may be (e.g., manually) input to the controller 779, and the controller 779 may control the RRMS 711, 712 accordingly (e.g., respective heaters thereof). In particular, the controller 779 may store at least two indications of application type (e.g., at a memory thereof): a single-side tuning indicator and a differential-side tuning indicator; and, depending on the indicator received matching the single-side tuning indicator or the differential-side tuning indicator, the controller 779 may control the RRMs 711, 712 accordingly.

Indeed, in some examples, controlling the RRMs 711, 712 into single-side tuning or differential-side tuning may occur on the basis of a received indication of application type, and the optical power may thereafter be monitored at the block 802 to change the tuning of the RRMs 711, 712 from single-side tuning or differential-side tuning, or from differential-side tuning to single-side tuning depending on the optical power. Put another way, the RRMs 711, 712 may initially be placed into one tuning mode and later changed to another tuning mode depending on the optical power.

Single-side tuning is next described, with reference to FIG. 9A and FIG. 9B.

While the RRMs 711, 712 are generally highly efficient, the RRMs 711, 712 may exhibit bistable and/or non-linear operation at high optical powers (e.g., above a threshold optical power) due to an optical self-heating effect, which may lead to a performance penalty. In some MZIs, such self heating may become significant at an optical input power of about 5 dbm, as measured at the sensor 780 of the input 704; in such examples, a threshold optical power is about about 5 dbm.

However, in some examples, optical power may be measured at one or more of the sensors 781, 782, such that optical powers input to each the waveguides 301, 302 is measured; in such examples, a threshold optical power is about about 2 dbm for either of the waveguides 301, 302, which corresponds to an optical input power of about 5 dbm as measured at the sensor 780, (e.g., assuming some loss). Hence, the threshold optical power may depend on which optical power is measured (e.g., via the sensor 780, or one or more of the sensors 781, 782).

As depicted in FIG. 9A, at a graph 900, such nonlinear behavior may cause a non-symmetric resonance 901 (e.g., an FSR) of an RRM 711, 712. In particular, the non-symmetric resonance 901 is indicated by non-symmetric transmission of an RRM 711, 712 as a function of wavelength. A position of wavelength 902 of the laser 707 that is used to generate light input to the optical input 704 is also indicated at the graph 900. Indeed, a position of wavelength 902 of such a laser is depicted to show that, in this situation, the RRMs 711, 712 may be tuned to the blue side of the resonance (e.g., an FSR) for operation as depicted in FIG. 9A and/or a blue side of the wavelength 902 of the laser 707. Also depicted in FIG. 9A is a difference in frequency, Δf, showing the difference in frequency between the laser wavelength 902 and red side of the resonance 901. For example, for a wavelength 902 of around 1310 nm, Δf may be around 10 GHz, though any suitable wavelengths 902 and frequency differences are within the scope of the present specification. Indeed, a wavelength 902 of around 1310 nm is common for modern optical communication systems.

Put another way, the resonance 901 is non-symmetric, with a red-side of the resonance, with respect to wavelength, having abrupt step-wise behavior; if either of the RRMs 711, 712 were tuned (e.g., via respective heaters thereof), such that the laser wavelength 902 was at a step 903, and/or on a red side of the step 903, modulation of light of the laser wavelength 902 would be challenging, if not impossible. As such, the RRMs 711, 712 are tuned (e.g., via respective heaters thereof) such that the laser wavelength 902 is in the region that is on a blue side of the step 903 and on a blue side of the wavelength 902, and in particular at a difference in frequency, Δf, from the step 903.

This self-heating issue may become more severe when a low-frequency stress signal and/or pattern passes through the electro-optic channel, thereby heating the RRMs 711,712, and leading to gradually moving of the resonance 901 to the right (a red shift) on the graph 900, such that the resonance 901 shifts in a red direction, to a position as represented by a resonance 904 as best seen in FIG. 9B at a graph 905 that also shows the resonance 901. As depicted at the graph 905, the resonance 904 includes a shifted step 906, thereby also increasing the average optical power. In general, this phenomenon may cause a change in average optical power to wander in an end-to-end link (e.g., between the optical transmitter 700 and a receiver in an optical communication system), resulting in a before forward error correction (FEC), and after FEC, bit error rate (BER) penalty.

Hence, to avoid operation of the RRMs 711,712 in the unstable "red" side of the laser wavelength 902, both of the RRM 711,712 may be operated and/or tuned to a "blue" side.

Differential-side tuning is next described, with reference to FIG. 10A and FIG. 10B, which respectively depict graphs 1000, 1002 that illustrate further aspects of the optical transmitter 700. In particular the graphs 1000, 1002 illustrate differential-side tuning of the RRMs 711, 712, where differential-side tuning may be understood to mean that one of the RRMs 711, 712 being tuned to the blue side of the resonance, while the other of the RRMs 711, 712 is tuned to the red side of the resonance.

In particular, the graph 1000 depicts respective resonances 1011, 1012 of the RRMs 711, 712, relative to the laser wavelength 902, when self-heating effect is at a minimum and/or when an input power is below the threshold optical power. The graph 1002 depicts curves 1021, 1022 showing phases of the RRMs 711, 712 having the optical properties of FIG. 10A, as a function of wavelength. The curves 1021, 1022 show that phase response of the RRMs 711, 712 changes linearly around the wavelength 902 of the laser 707, and may hence improve a total phase modulation at the output 706 (e.g., when the RRMS 711, 712 are modulated near the wavelength 902 either in single-side tuning mode or differential-side tuning mode.

It is understood from the resonances 1011, 1012 that, in this configuration, the first RRM 711 may be operated on a blue side, and the second RRM 712 may be operated on a red side, or vice versa. Differences between minima of the resonances 1011, 1012 and the laser wavelength 902 are indicated via -Δf, and +Δf, respectively. Again, for a wavelength 902 of about 1310 nm, Δf may be about 10 GHz, though any suitable wavelength and/or Δf is within the scope of the present specification.

Indeed, the resonances 1011, 1012 indicate that, in this configuration, the RRMs 711, 712 are both provided with (e.g., engineered and/or design with) low-quality factors (broadening the resonances 1011, 1012), which may further reduce the optical self-heating effect.

Such a configuration may be used in applications where the optical power of the laser light input to the optical transmitter 700 is not significantly high, and/or less than the threshold optical power, such that differentials-side tuning is used at the optical transmitter 700,. This configuration enhances the modulation efficiency and allows the RRMs 711, 712 to counteract each other's thermal variation impacts in the event of any temperature variation, therefore the average power of the waveguides 301, 302 remains constant.

For clarity, in some examples, an increase in optical power input to an RRM 711, 712 (e.g., that is still below the threshold optical power for self-heating to occur) should not lead to a drastically sharp slope on the red side of resonance. Furthermore, it is understood that an increase in temperature in these examples moves the resonances 1011, 1012 toward the right (higher wavelength and/or a red shift) on the graph 1000, and a decrease in temperature moves the resonances 1011, 1012 toward the left (lower wavelength and/or a blue shift) on the graph 1000.

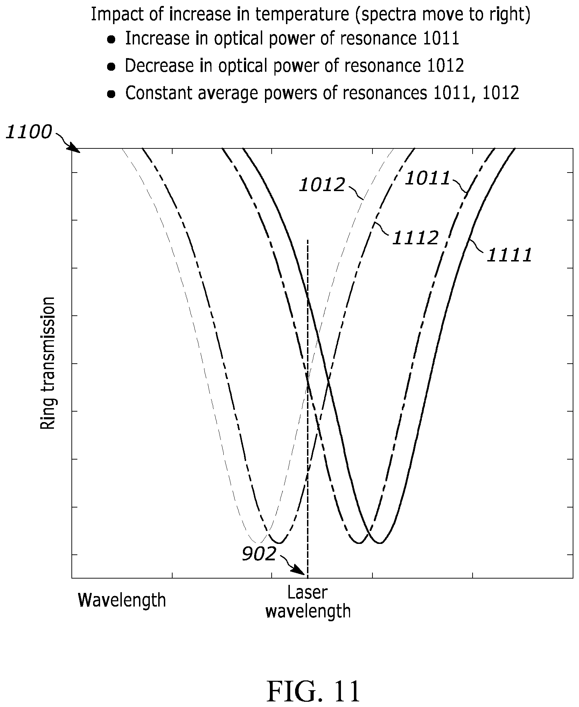

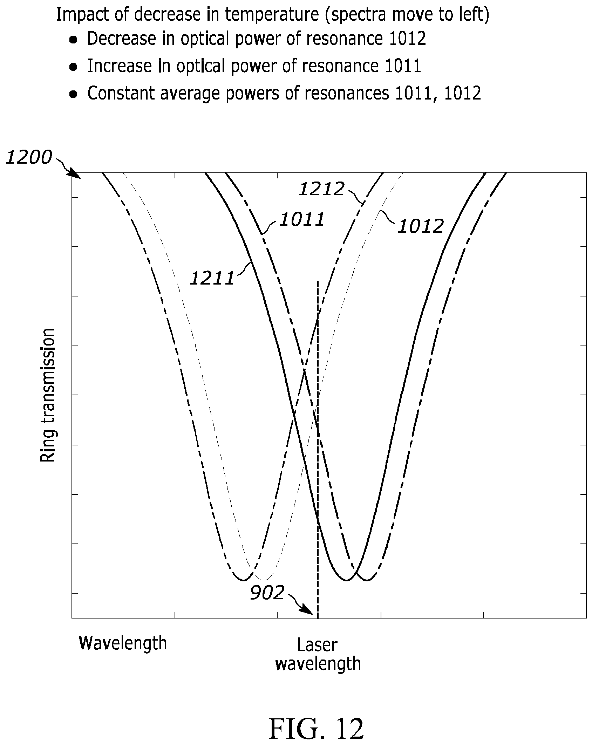

For example, attention is next directed to FIG. 11 and FIG. 12, which respectively depict shifts in the resonances 1011, 1012 as the temperature increases and decreases.

As clearly seen in a graph 1100 of FIG. 11, as the temperature increases, the resonances 1011, 1012 shift to the right, or undergo a red shift, to positions represented by resonances 1111, 1112, for example relative to the laser wavelength 902. In particular, while the shift of the resonance 1011 to the position represented by the resonance 1111 causes the transmission of the laser wavelength 902 to, and the shift of the resonance 1012 to the position represented by the resonances 1112 causes the transmission of the laser wavelength 902 to decrease, by about a same amount as the increase of the resonance 1011. Hence, the average optical power output by the combination of the RRMs 711, 712 remains about constant.

Similarly, as clearly seen in a graph 1200 of FIG. 12, as the temperature decreases, the resonances 1011, 1012 shift to the left, or undergo a blue shift, to positions represented by resonances 1211, 1212, for example relative to the laser wavelength 902. In particular, while the shift of the resonance 1011 to the position represented by the resonance 1211 causes the transmission of the laser wavelength 902 to decrease, the shift of the resonance 1012 to the position represented by the resonance 1212 causes the transmission of the laser wavelength 902 to increase by about a same amount as the decrease. Hence, the average optical power output by the combination of the RRMs 711, 712 again remains about constant.

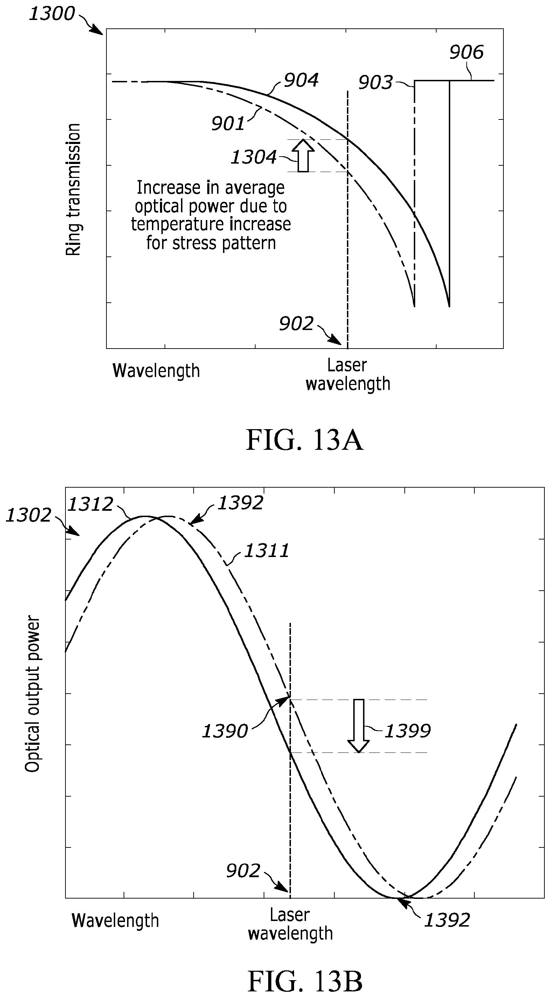

Attention is next directed to FIG. 13A and FIG. 13B, which respectively depict graphs 1300, 1302.

With attention first directed to FIG. 13A, the graph 1300 is the similar to the graph 905, with like components having like numbers and shows RRM transmission as a function of wavelength, for an RRM 711, 712, for nonlinear behavior during self-hearting. For example, the graph 1300 shows the resonances 901, 904, and the effect of an increase in temperature causing the optical transmission to increase as the resonance 901 moves to the right to the position of the resonance 904, the increase in temperature due to the aforementioned low-frequency stress signal and/or pattern. FIG. 13A further shows that a red-side of the resonances 901, 904 is drastically sharp, with respective steps 903, 906, and hence an RRM 711, 712 having the resonances 901, 904 is understood to be tuned to a blue side.

Put another way, as has already been explained, when an application requires very high optical power at the RRM inputs, to enhance the optical link budget, for example, a slope of the red side of the resonances 901, 904 will become drastically sharp, and both RRMs 711, 712 are tuned to a same side of resonance and in particular the blue side.

Furthermore, in this configuration, both RRMs 711, 712 will move in the same direction in response to temperature variations (for example in contrast to the configurations shown in FIG. 10A, FIG. 11 and FIG. 12), such that optical power output by the optical transmitter 700 may increase as represented by an arrow 1304 indicating an increase in the average optical power. In some instances, optical power output by the optical transmitter 700 may increase and become "too high", such that optical power output by the optical transmitter 700 may exceed an operating optical power of an optical communication system of which the optical transmitter 700 may be a component. For example, when the operating optical output power is "too high", optical output power may exceed the capability of an optical fiber to which the optical signal having the optical output power is output, and/or optical power output by the optical transmitter 700 may exceed the capability of a receiver receiving the optical signal. Hence, to compensate for the optical power variation caused by the temperature increase, an operating point of the optical transmitter 700 may be moved from a quadrature point toward a null point to decrease the optical power output by the optical transmitter 700.

For example, attention is directed to FIG. 13B, which depicts a graph 1302 showing total optical transmission of the optical transmitter 700 as a function of wavelength, as well as the laser wavelength 902.

A resonance 1311 is understood to be operated at a quadrature point 1390, where the transmission of the optical transmitter 700 is at about 50% at the laser wavelength 902 in this example. However, by the controller 779 adjusting heaters of the RRMs 711, 712, the transmission of the optical transmitter 700 may be shifted to the left and/or a blue direction, to a position represented by the resonance 1312, which moves a null point 1392 of the resonance 1311 towards the laser wavelength 902, thereby reducing the optical output power. For completeness, an "all-pass" and/or maximum point 1392 of the resonance 1311 is also depicted. Hence, the transmission of the optical transmitter 700 reduces from about 50% to below 50% and into a range of power that may be more acceptable for an optical communication system of which the optical transmitter 700 may be a component. In particular, the graph 1302 depicts an arrow 1399 indicating a decrease in the optical output power as the resonance 1311 optical transmitter 700 changes from being operated in quadrature to being operated closer to the null point 1392.

Put another way, an increase in temperature shifts a resonance of an RRM 711, 712 towards higher wavelengths. Consequently, for the configuration of FIG. 13A, the average optical power of the RRM 711, 712 also increases with the temperature with a constant laser wavelength 902. By adjusting the operating point of the optical transmitter 700, for example, by shifting the operating point from a quadrature point towards a null point via control of one or more of the heaters 761, 762, the increase in optical power is mitigated. Such control may occur in a feedback loop by receiving output from the sensor 785, and controlling one or more of the heaters 761, 762 to decrease the optical output power to a target optical output power that is, for example, at or below a threshold optical output power that may comprise an operating optical power of an optical communication system of which the optical transmitter 700 may be a component

Hence, the method 800 may further comprise to controller 779: determining an optical output power; and when the optical output power is above a threshold optical output power, controlling one or more of the heaters 761, 762 to reduce the optical output power to less than or equal to the threshold optical output.

Hence, while the optical transmitter 700 may be generally configured to operate at the quadrature point for PAM4 signaling, which may ideally require a 90-degree phase difference between optical signals in the different waveguides 701, 702, the optical transmitter 700 may be operated out of quadrature to reduce the optical output power to powers compatible with an optical communication system of which the optical transmitter 700 may be a component.

Furthermore, as has already been described, a length 703 may be introduced into the second waveguide 702 to provide a mismatch in the length of the waveguides 701, 702 such that the phase difference between the two arms becomes 90 degrees.

However, due to fabrication errors, and the like, operation of the optical transmitter 700 might not be exactly at the quadrature point by only using a length mismatch. Hence, one or more of the heaters 761, 762 may be provided at the waveguides 701, 702, and, by using the driver/switch 766, dynamic switching between operation of the heaters 761, 762 may be controlled. This configuration may enable selective activation of an appropriate heater 761, 762 (e.g., by the controller 779) based on an initial phase state.

For example, the heater 762 on the second waveguide 702 may be activated to achieve a quadrature point from near a null point (e.g., see FIG. 13B) using minimal power, while, the heater 761 on the first waveguide 701 may be activated when the initial state is closer to an "all-pass" point (e.g., see FIG. 13B).

The dynamic operation of the heaters 761, 762 may be advantageous not just for initial calibration or bring-up (e.g. an initial parameters setting), but also for ongoing operation of the optical transmitter 700. For example, when an unwanted phase offset occurs during operation of the optical transmitter 700, the heaters 761, 762 may be used to facilitate the recovery of the quadrature point efficiently, ensuring minimal power consumption.

Put another way, by monitoring the optical output power using the sensor 785, the controller 779 may control one or more of the heaters 761, 761 to maintain a constant output power and/or a target output power which, ideally comprises an output power at the quadrature point, but which may be lower when the target output power exceeds a threshold output power.

Furthermore, static power consumption may be optimized in the optical transmitter 700 by dynamically switching the heater voltage, V_{Heat} between the two in-line heaters 761, 762, which may better enable the optical transmitter 300 to operate at a quadrature point.

Furthermore, static power consumption of the optical transmitter 700 may be optimized by determining a minimum power of the heaters 761, 762 to bring the optical transmitter 700 into quadrature.

For example, attention is now directed to FIG. 14 which depicts a flowchart representative of a method 1400 for controlling an optical transmitter into quadrature while minimizing power usage. The operations of the method 1400 correspond to machine readable instructions that are executed by the controller 779. In the illustrated example, the instructions represented by the blocks of the method 1400 may be stored at a memory in communication with the controller 779. The method 1400 of FIG. 10 is one way in which the optical transmitter 700 may be configured. Furthermore, the following discussion of the method 1400 will lead to a further understanding of the optical transmitter 700, and its various components.

The method 1400 need not be performed in the exact sequence as shown and likewise various blocks may be performed in parallel rather than in sequence. Accordingly, the elements of method 1400 are referred to herein as "blocks" rather than "steps." The method 1400 may be implemented on variations of the optical transmitter 700, as well.

At a block 1402, the controller 779 controls at least one heater 761, 762, of respective heaters 761, 762, to a plurality of operating conditions, the one or more respective heaters 761, 762 located along the pair of waveguides 701, 702 of a Mach-Zehnder interferometer (MZI) (e.g., the optical transmitter 700), the respective heaters 761, 762 configured to heat a respective portion of the pair of waveguides 701, 702. The plurality of operating conditions may comprise different heater voltages to which the heaters 761, 762 are controlled.

At a block 1404, the controller 779 monitors changes in the output power of the MZI as the at least one heater 761, 762 is controlled. Such monitoring may occur, for example, via the sensor 785.

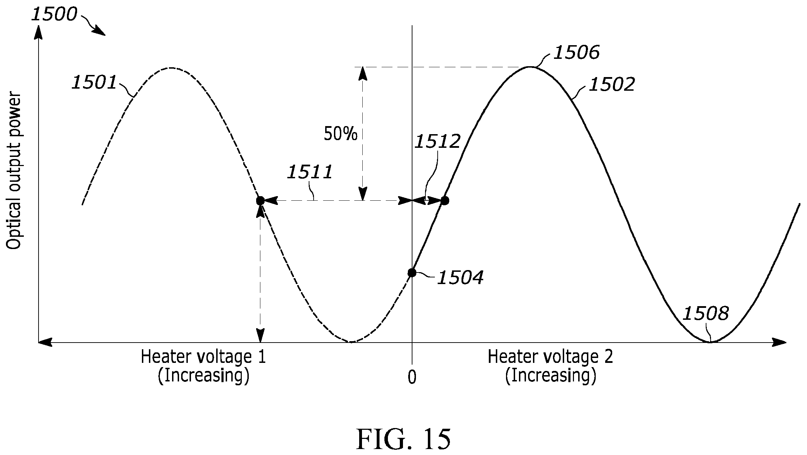

At a block 1406, the controller 779 determines, using the changes in the output power, an optical transmission curve of the MZI. The optical transmission curve may comprise the output power, as determined at the block 1404, as a function of heater voltage, as depicted in FIG. 15.

At a block 1408, the controller 779 determines respective operating conditions of the respective heaters 761, 762 to bring the MZI into quadrature while one of the respective heaters 761, 762 is on and an other of the respective heaters 761, 762 is off.

At a block 1410, the controller 779 selects the respective operating conditions for a first heater 761, 762, of the respective heaters 761, 762, that minimize power of the respective heaters 761, 762 while a second heater 761, 762, of the respective heaters 761, 762 is off.

At a block 1412, the controller 779 controls the first heater 761, 762 according to the respective operating conditions, as selected, while the second heater 761, 762 is off.

Examples of the method 1400 are next described with respect to FIG. 15.

For example, attention is directed to FIG. 15, which depicts a graph 1500 showing curves 1501, 1502 of optical output power as a function of heater voltage for, respectively, the heaters 761, 762. A zero voltage point for each of the heaters 761, 762 is further indicated (e.g., "0") such that when each of the heaters 761, 762 is off, the optical output power is at a value 1504, which may depend on fabrication of the optical transmitter 700. Put another way, while the optical transmitter 700 may nominally be designed to be in quadrature while the heaters 761, 762 are both off, fabrication tolerances may cause the optical transmitter 700 not to be in quadrature (e.g., about 50% of a maximum optical output power 1506) when the heaters 761, 762 are both off.

Furthermore, for the curve 1501, heater voltage of the first heater 761 is understood to be increasing from the zero voltage point to the left, for the curve 1502, heater voltage of the second heater 762 is understood to be increasing from the zero voltage point to the right. Furthermore, it is understood that the curve 1501 is acquired by controlling the first heater 761 from the zero voltage point to increasing heater voltages while the second heater 762 is off, and the curve 1502 is acquired by controlling the second heater 762 from the zero voltage point to increasing heater voltages while the first heater 761 is off.

The curves 1501, 1502, taken together, are understood to have a predefined shape (e.g., sinusoidal), and it is further understood that the curves 1501, 1502 continue from one another along the predefined shape from the zero voltage point. As such, the controller 779 may control only one of the heaters 761, 762 and determine only one of the curves 1501, 1502 to derive the other of the curves 1501, 1502 (e.g., at the blocks 1402, 1404, 1406 of the method 1400). In particular, the controller 779 may sweep one of the heaters 761, 762 through a range of voltages to at least determine the maximum optical output power 1506 and a minimum optical output power 1508, and a shape of a curve 1501, 1502 from the zero voltage point to the maximum optical output power 1506 and the minimum optical output power 1508. The range of voltages may comprise a predetermined range that has been heuristically determined to include maximum optical output powers and minimum optical output powers for previously manufactured optical transmitters, and the like.

Assuming that a quadrature point of the optical transmitter 700 is at about 50% of the maximum optical output power 1506, from FIG. 15, it is understood that controller 779 may determine (e.g., at the block 1408 of the method 1400) that the optical transmitter 700 may be operated in quadrature under at least two conditions: when the first heater 761 is at a first voltage 1511, while the second heater 762 is off; or when the second heater 761 is at a second voltage 1512, while the first heater 761 is off.

The controller 779 may select (e.g., at the block 1410 of the method 1400) the smaller of the first voltage 1511 and the second voltage 1512. For example, as depicted, the first voltage 1511 is smaller than the second voltage 1512 and hence, in the depicted example, the controller 779 selects the first voltage 1511. The controller 779 may bring the optical transmitter 700 into quadrature by controlling (e.g., at the block 1412 of the method 1400) the first heater 761 to the first voltage 1511 while the second heater 762 is off. As such, the smallest voltage 1511, 1512 is used to bring the optical transmitter 700 into quadrature to minimize power usage of the optical transmitter 700.

However, as the zero voltage point may vary from optical transmitter 700 to optical transmitter 700 in other examples, the second voltage 1512 may be smaller than the first voltage 1511. In these examples, the controller 779 may select (e.g., at the block 1410 of the method 1400) the second voltage 1512 over the first voltage 1511 and bring the optical transmitter 700 into quadrature by controlling (e.g., at the block 1412 of the method 1400) the second heater 761 to the second voltage 1512 while the first heater 761 is off.

Regardless, the method 1400 may be implemented when the optical transmitter 700 is turned on, and the operating conditions of the heaters 761, 762, that minimize power usage to bring the optical transmitter 700 into quadrature, may be stored at a memory of the controller 779 and later used when the optical transmitter 700 is later turned off and back on. Alternatively, or in addition, the method 1400 may be implemented each time the optical transmitter 700 is turned on, and/or periodically while the optical transmitter 700 is on in case the operating conditions of the heaters 761, 762 to bring the optical transmitter 700 into quadrature drifts.

A first aspect of the present specification provides a Mach-Zehnder Interferometer (MZI) comprising: a pair of waveguides; an optical input configured to split light received at the optical input between the pair of waveguides; respective ring resonator modulators, located on the pair of waveguides, the respective ring resonator modulators comprising respective pn-junctions having respective capacitances connected in series; a common driver configured to: receive a differential electrical signal with data encoded therein; and control, using the differential electrical signal, respective n-sides of the respective pn-junctions to control the respective ring resonator modulators to respectively modulate the light into respective optical signals; a common voltage bias configured to provide a common voltage to respective p-sides of the respective pn-junctions; and an optical output configured to: receive the respective optical signals from the pair of waveguides; and combine the respective optical signals.

At the MZI of the first aspect, the respective capacitances of the respective pn-junctions are connected in series such that a total capacitance, of the respective capacitances, is dominated by a smaller capacitance of the respective capacitances.

At the MZI of the first aspect, the respective capacitances of the respective pn-junctions are connected in series, and change over time, based on respective voltages applied to the respective pn-junctions, and wherein a total capacitance, of the respective capacitances, is dominated by a smaller capacitance of the respective capacitances at any given point in time.

At the MZI of the first aspect, the respective pn-junctions may be driven in antiphase.

At the MZI of the first aspect, the common voltage bias may provides a common bias point to the respective pn-junctions.

The MZI of the first aspect may further comprise an electrical connection between the respective p-sides, and wherein the common voltage bias is electrically connected to the electrical connection.

The MZI of the first aspect may further comprise an inductor between the common voltage bias and the respective p-sides, the inductor configured to block high frequency voltages at the common voltage bias from the respective p-sides.

At the MZI of the first aspect, the pair of waveguides may be of different lengths to control a phase difference between the respective optical signals.

The MZI of the first aspect may further comprise at least one heater along the pair of waveguides, the at least one heater configured to heat a respective portion of at least of one waveguide, of the pair of waveguides, to control a phase difference of between the respective optical signals.

At the MZI of the first aspect, the respective optical signals may be combined at a quadrature point.

The MZI of the first aspect may further comprise: at least one heater along the pair of waveguides, the at least one heater configured to heat a respective portion of at least one waveguide, of the pair of waveguides; and a controller configured to control the at least one heater to control a phase difference between the respective optical signals to a quadrature point at the optical output.

The MZI of the first aspect may further comprise: a plurality of sensors configured to detect power of the light at the optical input, the optical output, and at one or more respective positions along the pair of the waveguides; respective heaters along the pair of waveguides, the respective heaters configured to heat a respective portion of at least one waveguide, of the pair of waveguides; and a controller, communicatively coupled to the plurality of sensors and the respective heaters, the controller configured to control at least one heater, of the respective heaters, to control a phase difference between the respective optical signals to a quadrature point at the optical output, based on respective output from two or more of the plurality of sensors.

A second aspect of the present specification provides a method comprising: determining, via a controller, an optical power at a Mach-Zehnder interferometer (MZI); when the optical power is above a threshold optical power, controlling, via the controller, the MZI into a single-side tuning mode; and when the optical power is below the threshold optical power, controlling, via the controller, the MZI into a differential-side tuning mode, wherein, in the single-side tuning mode, a first ring modulator and a second ring modulator of the MZI are both tuned to a blue side of a resonance frequency, and wherein, in the differential-side tuning mode, the first ring modulator is tuned to the blue side of the resonance frequency and the second ring modulator is tuned to a red side of the resonance frequency.

At the method of the second aspect, determining the optical power may comprise: determining optical input power at an input to the MZI; or determining respective optical input power on one or more waveguides of the MZI, and wherein the threshold optical power depends on where the optical power is determined.

At the method of the second aspect, controlling the MZI into the single-side tuning mode or the differential-side tuning mode may comprise: controlling respective heaters of the first ring modulator and the second ring modulator.

The method of the second aspect may further comprise: determining an application type for the MZI; and prior to comparing the optical power to the threshold optical power, selecting the single-side tuning mode or the differential-side tuning mode based on the application type.

A second aspect of the present specification provides a method comprising: controlling, via a controller, at least one heater, of respective heaters, to a plurality of temperatures, the one or more respective heaters along a pair of waveguides of a Mach-Zehnder interferometer (MZI), the respective heaters configured to heat a respective portion of the pair of waveguides; monitoring, via the controller, changes in output power of the MZI as the at least one heater is controlled; determining, via the controller, using the changes in the output power, an optical transmission curve of the MZI; determining, via the controller, respective operating conditions of the respective heaters to bring the MZI into quadrature while one of the respective heaters is off; selecting, via the controller, the respective operating conditions for a first heater, of the respective heaters, that minimize power of the respective heaters while a second heater, of the respective heaters is off; and controlling, via the controller, the first heater according to the respective operating conditions, as selected, while the second heater is off.

At the method of the third aspect, monitoring changes in the output power may comprise sampling light intensity using a sensor optically coupled to an output of the MZI.

At the method of the third aspect, controlling the at least one heater may comprise: sweeping a heater voltage applied to at least one heater, of the respective heaters independently over a predetermined range while another heater, of the respective heaters, is off.

At the method of the third aspect, determining the optical transmission curve may comprise: sweeping a heater voltage applied to one heater, of the respective heaters independently over a predetermined range while another heater, of the respective heaters, is off; and using a portion of the optical transmission curve, determined for the one heater, to determine a remaining portion of the optical transmission curve for the another heater.

The many features and advantages of the embodiments will be apparent from the description and, thus, it is intended by the appended claims to cover all such features and. Further, since numerous modifications and changes will readily occur to those skilled in the art, it is not desired to limit the embodiments to the exact construction and operation illustrated and described, and accordingly all suitable modifications and equivalents may be resorted to, falling within the scope of the claims.

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that there are yet more alternative examples and modifications possible, and that the above examples are only illustrations of one or more examples. The scope, therefore, is only to be limited by the claims appended hereto.

In general, the disclosure therefore concerns the aspects defined by the following three sets of clauses.
First set of clauses:
   1. A Mach-Zehnder Interferometer (MZI) comprising:
      a pair of waveguides;
      an optical input configured to split light received at the optical input between the pair of waveguides;
      respective ring resonator modulators, located on the pair of waveguides, the respective ring resonator modulators comprising respective pn-junctions having respective capacitances connected in series;
      a common driver configured to: receive a differential electrical signal with data encoded therein; and control, using the differential electrical signal, respective n-sides of the respective pn-junctions to control the respective ring resonator modulators to respectively modulate the light into respective optical signals;
      a common voltage bias configured to provide a common voltage to respective p-sides of the respective pn-junctions; and
      an optical output configured to: receive the respective optical signals from the pair of waveguides; and combine the respective optical signals.
   2. The MZI of clause 1, wherein the respective capacitances of the respective pn-junctions are connected in series such that a total capacitance, of the respective capacitances, is dominated by a smaller capacitance of the respective capacitances.
   3. The MZI of any one of clause 1 to clause 2, wherein the respective capacitances of the respective pn-junctions are connected in series, and change over time, based on respective voltages applied to the respective pn-junctions, and
      wherein a total capacitance, of the respective capacitances, is dominated by a smaller capacitance of the respective capacitances at any given point in time.
   4. The MZI of any one of clause 1 to clause 3, wherein the respective pn-junctions are driven in antiphase.
   5. The MZI of any one of clause 1 to clause 4, wherein the common voltage bias provides a common bias point to the respective pn-junctions.
   6. The MZI of any one of clause 1 to clause 5, further comprising an electrical connection between the respective p-sides, and wherein the common voltage bias is electrically connected to the electrical connection.
   7. The MZI of any one of clause 1 to clause 6, further comprising an inductor between the common voltage bias and the respective p-sides, the inductor configured to block high frequency voltages at the common voltage bias from the respective p-sides.
   8. The MZI of any one of clause 1 to clause 7, wherein the pair of waveguides are of different lengths to control a phase difference between the respective optical signals.
   9. The MZI of any one of clause 1 to clause 8, further comprising at least one heater along the pair of waveguides, the at least one heater configured to heat a respective portion of at least of one waveguide, of the pair of waveguides, to control a phase difference of between the respective optical signals.
   10. The MZI of any one of clause 1 to clause 9, wherein the respective optical signals are combined at a quadrature point.
   11. The MZI of any one of clause 1 to clause 10, further comprising:
      at least one heater along the pair of waveguides, the at least one heater configured to heat a respective portion of at least one waveguide, of the pair of waveguides; and
      a controller configured to control the at least one heater to control a phase difference between the respective optical signals to a quadrature point at the optical output.
   12. The MZI of any one of clause 1 to clause 11, further comprising:
      a plurality of sensors configured to detect power of the light at the optical input, the optical output, and at one or more respective positions along the pair of the waveguides;
      respective heaters along the pair of waveguides, the respective heaters configured to heat a respective portion of at least one waveguide, of the pair of waveguides; and
      a controller, communicatively coupled to the plurality of sensors and the respective heaters, the controller configured to control at least one heater, of the respective heaters, to control a phase difference between the respective optical signals to a quadrature point at the optical output, based on respective output from two or more of the plurality of sensors.
Second set of clauses:
   1. A method comprising:
      determining, via a controller, an optical power at a Mach-Zehnder interferometer (MZI);
      when the optical power is above a threshold optical power, controlling, via the controller, the MZI into a single-side tuning mode; and
      when the optical power is below the threshold optical power, controlling, via the controller, the MZI into a differential-side tuning mode,
      wherein, in the single-side tuning mode, a first ring modulator and a second ring modulator of the MZI are both tuned to a blue side of a resonance frequency, and
      wherein, in the differential-side tuning mode, the first ring modulator is tuned to the blue side of the resonance frequency and the second ring modulator is tuned to a red side of the resonance frequency.
   2. The method of clause 1, wherein determining the optical power comprises:
      determining optical input power at an input to the MZI; or
      determining respective optical input power on one or more waveguides of the MZI, and
      wherein the threshold optical power depends on where the optical power is determined.
   3. The method of any one of clause 1 to clause 2, wherein controlling the MZI into the single-side tuning mode or the differential-side tuning mode comprises:
      controlling respective heaters of the first ring modulator and the second ring modulator.
   4. The method of any one of clause 1 to clause 3, further comprising:
      determining an application type for the MZI; and
      prior to comparing the optical power to the threshold optical power, selecting the single-side tuning mode or the differential-side tuning mode based on the application type.
**Third set of clauses:**
   1. A method comprising:
      controlling, via a controller, at least one heater, of respective heaters, to a plurality of temperatures, the one or more respective heaters along a pair of waveguides of a Mach-Zehnder interferometer (MZI), the respective heaters configured to heat a respective portion of the pair of waveguides;
      monitoring, via the controller, changes in output power of the MZI as the at least one heater is controlled;
      determining, via the controller, using the changes in the output power, an optical transmission curve of the MZI;
      determining, via the controller, respective operating conditions of the respective heaters to bring the MZI into quadrature while one of the respective heaters is off;
      selecting, via the controller, the respective operating conditions for a first heater, of the respective heaters, that minimize power of the respective heaters while a second heater, of the respective heaters is off; and
      controlling, via the controller, the first heater according to the respective operating conditions, as selected, while the second heater is off.
   2. The method of clause 1, wherein monitoring changes in the output power comprises sampling light intensity using a sensor optically coupled to an output of the MZI.
   3. The method of any one of clause 1 to clause 2, wherein controlling the at least one heater comprise:
      sweeping a heater voltage applied to at least one heater, of the respective heaters independently over a predetermined range while another heater, of the respective heaters, is off.
4. The method of any one of clause 1 to clause 3, wherein determining the optical transmission curve comprises:
   sweeping a heater voltage applied to one heater, of the respective heaters independently over a predetermined range while another heater, of the respective heaters, is off; and
   using a portion of the optical transmission curve, determined for the one heater, to determine a remaining portion of the optical transmission curve for the another heater.

## Claims

1. A Mach-Zehnder Interferometer (MZI) (300) comprising:
a pair of waveguides (301, 302);
an optical input (304) configured to split light received at the optical input (304) between the pair of waveguides (301, 302);
respective ring resonator modulators (311, 312), located on the pair of waveguides (301, 302), the respective ring resonator modulators (311, 312) comprising respective pn-junctions (411, 412) having respective capacitances connected in series;
a common driver (314) configured to: receive a differential electrical signal with data encoded therein; and control, using the differential electrical signal, respective n-sides of the respective pn-junctions (411, 412) to control the respective ring resonator modulators (311, 312) to respectively modulate the light into respective optical signals;
a common voltage bias (350) configured to provide a common voltage to respective p-sides of the respective pn-junctions (411, 412); and
an optical output (306) configured to: receive the respective optical signals from the pair of waveguides (301, 302); and combine the respective optical signals.

2. The MZI (300) of claim 1, wherein the respective capacitances of the respective pn-junctions (411, 412) are connected in series such that a total capacitance, of the respective capacitances, is dominated by a smaller capacitance of the respective capacitances.

3. The MZI (300) of any one of claim 1 to claim 2, wherein the respective capacitances of the respective pn-junctions (411, 412) are connected in series, and change over time, based on respective voltages applied to the respective pn-junctions (411, 412), and
wherein a total capacitance, of the respective capacitances, is dominated by a smaller capacitance of the respective capacitances at any given point in time.

4. The MZI (300) of any one of claim 1 to claim 3, wherein the respective pn-junctions (411, 412) are driven in antiphase.

5. The MZI (300) of any one of claim 1 to claim 4, wherein the common voltage bias (350) provides a common bias point to the respective pn-junctions (411, 412).

6. The MZI (300) of any one of claim 1 to claim 5, further comprising an electrical connection (351) between the respective p-sides, and wherein the common voltage bias (350) is electrically connected to the electrical connection (351).

7. The MZI (300) of any one of claim 1 to claim 6, further comprising an inductor (352) between the common voltage bias (350) and the respective p-sides, the inductor (352) configured to block high frequency voltages at the common voltage bias (350) from the respective p-sides.

8. The MZI (300) of any one of claim 1 to claim 7, wherein the pair of waveguides (301, 302) are of different lengths to control a phase difference between the respective optical signals.

9. The MZI (300) of any one of claim 1 to claim 8, further comprising at least one heater (361, 362) along the pair of waveguides (301, 302), the at least one heater (361, 362) configured to heat a respective portion of at least of one waveguide, of the pair of waveguides (301, 302), to control a phase difference of between the respective optical signals.

10. The MZI (300) of any one of claim 1 to claim 9, wherein the respective optical signals are combined at a quadrature point.

11. The MZI (300) of any one of claim 1 to claim 10, further comprising:
at least one heater (361, 362) along the pair of waveguides (301, 302), the at least one heater (361, 362) configured to heat a respective portion of at least one waveguide, of the pair of waveguides (301, 302); and
a controller (379) configured to control the at least one heater (361, 362) to control a phase difference between the respective optical signals to a quadrature point at the optical output (306).

12. The MZI (300) of any one of claim 1 to claim 11, further comprising:
a plurality of sensors (380, 381, 382, 383, 384, 385) configured to detect power of the light at the optical input (304), the optical output (306), and at one or more respective positions along the pair of the waveguides;
respective heater (361, 362)s along the pair of waveguides (301, 302), the respective heater (361, 362)s configured to heat a respective portion of at least one waveguide, of the pair of waveguides (301, 302); and
a controller (379), communicatively coupled to the plurality of sensors (380, 381, 382, 383, 384, 385) and the respective heater (361, 362)s, the controller (379) configured to control at least one heater (361, 362), of the respective heater (361, 362)s, to control a phase difference between the respective optical signals to a quadrature point at the optical output (306), based on respective output (306) from two or more of the plurality of sensors (380, 381, 382, 383, 384, 385).
